# EUROPÄISCHE PATENTSCHRIFT

(11) **EP 0 869 303 B1**
(45) Veröffentlichungstag und Bekanntmachung des Hinweises auf die Patenterteilung: **02.05.2003**
(21) Anmeldenummer: 98105075.0
(22) Anmeldetag: 20.03.1998
(51) Int. Cl.: F16L 5/04, H02G 3/22

(54) **Vorrichtung zum Verschliessen einer Kabeldurchführung**
Device for sealing a cable feedthrough
Dispositif pour boucher une ouverture de traversée de câble

(30) Priorität: 05.04.1997 DE 19714150
(43) Veröffentlichungstag der Anmeldung: 07.10.1998
(73) Patentinhaber: AIK Flammadur Brandschutz GmbH, 34123 Kassel (DE)
(72) Erfinder: Seebode, Heinrich, 22607 Hamburg (DE)
(74) Vertreter: WALTHER, WALTHER & HINZ Patentanwälte

(56) Entgegenhaltungen:
- EP-A- 0 146 193
- DE-U- 9 003 636
- US-A- 4 093 818
- US-A- 4 419 535

## Beschreibung

Die Erfindung betrifft eine Vorrichtung zum Verschließen einer Kabeldurchführung in Trennwänden der im Oberbegriff des Anspruchs 1 definierten Gattung.

Solche Verschließvorrichtungen werden vornehmlich bei Kabeldurchführungen in Schiffsdecks oder in Schotts von Schiffen des On- und Off-Shore-Bereichs eingesetzt und dienen zur Prävention von Feuer-, Wasser- und Gasschäden. Sie finden aber auch zum gleichen Zweck Anwendung im Hochund Industriebau.

Bei einer unter der Marke Geaquello® bekannten Verschließvorrichtung für Kabeldurchführungen (Prospekt:"Kabeldurchführungen ohne Risiko, ohne Probleme, GEAQUELLO® - System," AEG-Telefunken) ist ein den Rahmen bildender ovaler oder runder Stahlstutzen in die Trennwand formschlüssig so eingesetzt, daß er über beide Trennwandseiten vorsteht, und mit der Trennwand verschweißt ist. Nach Durchführung der Kabel durch den Stahlstutzen werden zwischen den Kabeln einerseits und den Kabeln und dem Stahlstutzen andererseits Quellmodule zellenförmig grob eingepaßt, wodurch ein Mindestabstand zwischen den einzelnen Kabeln und dem Stutzen gewährleistet ist. Die enorm saugfähigen Quellmodule werden mit einer Imprägnierflüssigkeit (z.B. E824) bespritzt und quellen dadurch auf. Durch eine in dem Stahlstutzen vorhandene Öffnung wird eine Vergußmasse (z.B. E795) eingebracht, die nach ca. drei bis vier Stunden abbindet und anschließend chemisch aushärtet. Eine zweite Öffnung in dem Stahlstutzen dient zur Entlüftung beim Einbringen der Vergußmasse.

Bei einer ebenfalls bekannten Verschließvorrichtung für Kabeldurchführungen (GK Packsystem der Fa. Günther Klein Industriebedarf GmbH) ist ein den Rahmen bildender rechteckiger Spannrahmen aus Stahl oder Aluminium in die Trennwand eingeschweißt und die Hohlräume zwischen den durchgeführten Kabeln oder Rohren mit passenden, flexiblen Füll- und Packmodulen abgedichtet. Die zweischalig ausgeführten Packmodule besitzen dabei eine den Kabeln oder Rohren angepaßte halbkreisförmige Rinne, so daß die beiden Modulschalen jeweils ein Kabel oder Rohr formschlüssig umschließen. Mit einer Endabdeckung und einer Spannschraube werden die Module festgelegt. Die Module sind so flexibel, daß sie bei Druck alle evtl. verbleibenden Hohlräume abdichten. Die gepackten einzelnen Modulreihen werden durch Verankerungsscheiben gehalten.

Sowohl das zuvor beschriebene bekannte Vergußsystem als auch das vorstehend angesprochene Packsystem erfordern zunächst die Einarbeitung des Rahmens in die Trennwandöffnung und das anschließende Verlegen der Kabel durch Trennwandöffnung und Rahmen hindurch. Die dabei benötigten Montagezeiten sind insbesondere bei dem bekannten Packsystem relativ hoch, was die Herstellungskosten stark ansteigen läßt.

Bei einer bekannten Verschließvorrichtung der eingangs genannten Art (DE 30 06 794 C2) sind in dem rechteckförmigen, teilbaren Rahmen mehrere elastisch verformbare Platten mit Durchführungen zum vereinzelten Durchführen von unterschiedlich oder gleichdicken Kabeln eingesetzt und mittels auf die Außenfläche der Platten gelegten Druckplatten so verspannt, daß die Platten verformt werden und mit dem Rahmen einerseits und mit den Außenflächen der Kabel andererseits in dichter Anlage gelangen. Die Platten sind aus einem elastomeren, intumeszenten Material gefertigt, und der Rahmen ist an einer Brandschutzmauer, eine Maueröffnung umschließend. Unter normalen Bedingungen bilden die Platten im komprimierten Zustand eine gasdichte Sperre gegenüber den Kabeln. Wird durch ein Feuer die Kabelisolation zerstört, so übt das bei Hitze anschwellende Material der Platten einen radialen Druck auf die Kabel aus und drückt die geschmolzene Kabelisolation heraus, so daß wiederum der Durchschlag von Gasen oder Flammen zwischen Platten und Kabel verhindert wird.

Bei einem bekannten Rohrschott zum Schutze von Rohrdurchführungen durch Wände oder Decken im Brandfall (DE 89 10 966 U1) wird ein durch eine Wandöffnung hindurchgeführtes Kunststoffrohr von einem zweiteiligen Zylindermantel oder hohlzylindrischen Rahmen eines Gehäuses umschlossen, und im Ringraum zwischen Gehäusemantel und Rohr ist ein Quellmittel in Form von zwei halbrohrförmigen Formkörpern eingelegt. Der Ringraum ist auf seiner einen Stirnseite von der Wand oder Decke, an die das Gehäuse über einen an dieser Stirnseite ausgebildeten Ringflansch angeschraubt ist, und auf seiner anderen Stirnseite von einem am Gehäuse befestigten Ringflansch abgedeckt, der einen auslösbaren Brandschutzvorhang enthält.

Aus der US 4,419,535 ist eine Vorrichtung zum Verschließen einer Kabeldurchführung bekannt, bei der ein aus mehreren Einzelteilen zusammengeschweißter Rahmen in die Kabeldurchführung einer Wand eingesetzt wird, wobei die Kabel ebenfalls durch den Rahmen führen. Der zwischen den Kabeln und dem Rahmen verbleibende Hohlraum wird durch einzelne Bleche in verschiedene Abteile aufgeteilt, wobei die nicht mit Kabeln besetzten Abteile mit nicht brennbaren Einsätzen ausgefüllt werden. Dabei füllen die großen Einsätze den größten Teil dieser Abteile aus, während die eher länglichen Einsätze dann auf die Einsätze aufgelegt werden, um eine abdeckende Schicht zu erreichen.

Aus dem deutschen Gebrauchsmuster 90 03 636.0 U1 ist eine Vorrichtung zum Verschließen einer Kabeldurchführung bekannt, bei der zunächst einmal um die jeweiligen Kabel eine im Querschnitt U-förmige Rinne gelegt wird. Der Hohlraum zwischen Rinne und Kabeln wird mit einem schwammartigen Füllmittel aufgefüllt, welches bei Kontakt mit beispielsweise Feuer, Wasser oder (Rauch-) Gas expandiert. Um diese metallische Rinne wird dann ein ebenfalls U-förmiger Rahmen gesetzt, welcher an einer Wand befestigbar ist. Alle drei Seiten dieses Rahmens sind aus ebenfalls im Querschnitt U-förmigen Einzelteilen gebildet und liegen bündig an der Rinne an. An der oben offenen Seite des Rahmens wird ein ebenfalls U-förmiger Deckel aufgesetzt, um den Rahmen zu schließen. Der durch die U-förmige Ausgestaltung der Einzelteile des Rahmens und des Deckels entstehende Hohlraum zwischen Rinne und Rahmen sowie im Deckel wird mit Dichtungskörpern aus einem feuerhemmenden Material versehen.

Dieser Dichtungskörper besteht ausdrücklich nicht aus einem bei Hitze quellendem Material, da der zwischen dem Dichtungskörper und der Rinne bestehende Luftraum ausdrücklich auch bei großer Hitze möglichst lange erhalten werden soll. Dies wäre aber nicht der Fall, wenn der Dichtungskörper bei Hitze quillt.

Der Erfindung liegt die Aufgabe zugrunde, eine Vorrichtung zum Verschließen einer Kabeldurchführung der eingangs genannten Art zu schaffen, die bei bereits verlegten Kabeln noch installierbar und damit nachrüstbar und zudem kostengünstig herstellbar und montagefreundlich ist.

Die Aufgabe ist bei einer Vorrichtung zum Verschließen einer Kabeldurchführung der im Oberbegriff des Anspruchs 1 angegebenen Gattung erfindungsgemäß durch die Merkmale im Anspruch 1 gelöst.

Die erfindungsgemäße Verschließvorrichtung hat den Vorteil, daß durch das dichtende Aufsetzen und Befestigen des Rahmens an der Trennwand und durch die Zweiteiligkeit des Rahmens die Verschließvorrichtung nicht nur unmittelbar und ausschließlich bei der Kabelinstallation eingebracht, sondern auch noch nachträglich montiert werden kann, so daß eine Nachrüstung einer Anlage mit den Verschließvorrichtungen zur Einhaltung von vorgegebenen Sicherheitsbedingungen jederzeit möglich ist. Die beiden Rahmenteile werden einfach mit ihren beiden Schenkeln und den einliegenden Brandschutzkissen um den Kabelverbund gelegt und miteinander verbunden und dann an der Trennwand mit gegenüber der Trennwand abgedichteter Stirnseite befestigt. Durch das zweilagige Brandschutzkissen wird sichergestellt, daß im Brandfall die Quellung des Brandschutzmaterials nicht zu einem mechanischen Abdrücken der Brandschutzkassette von der Trennwand infolge zu großen Quellkräften und damit zu einem Freilegen der Trennwandöffnung führt. Dies wird dadurch erreicht, daß dem quellenden Brandschutzmaterial durch die infolge Erhitzen sinternde und damit schrumpfende Lage aus Mineralstoffen ein zusätzliches Ausdehnvolumen zur Verfügung gestellt wird. Die Verschließvorrichtung hat ein geringes Gewicht, ist kostengünstig in der Herstellung und kann relativ einfach und schnell montiert werden, so daß die Gestehungskosten insgesamt sehr niedrig sind, was sich insbesondere bei Großanlagen, wie Schiffsbordnetzen etc., in einem wesentlichen Wettbewerbsvorteil niederschlägt. Aufwendige Schweißarbeiten, wie das Einschweißen des Rahmens in die Trennwandöffnung bei den bekannten Verschließvorrichtungen, entfallen.

Zweckmäßige Ausführungsformen der erfindungsgemäßen Verschließvorrichtung mit vorteilhaften Weiterbildungen und Ausgestaltungen der Erfindung ergeben sich aus den weiteren Ansprüchen.

Gemäß einer vorteilhaften Ausführungsform der Erfindung ist der zweiteilige Rahmen sowohl mit der Trennwand verschraubt, wozu er an mindestens zwei einander gegenüberliegenden Rahmenschenkeln jeweils einen querabstehenden Befestigungswinkel trägt, als auch mit seiner an der Trennwand anliegenden Stirnfläche mit der Trennwand verklebt. Dadurch ergibt sich eine haltbare und dichte Verbindung des Rahmens mit der Trennfläche, die den Forderungen nach Gas- und Wasserdichtheit genügt.

Gemäß einer bevorzugten Ausführungsform der Erfindung ist die Lage aus Brandschutzmaterial des in den Rahmenschenkeln einliegenden Brandschutzkissens aus einem unter der Bezeichnung "Flammadur® VP F400" bekannten flexiblen Schaumstoff geschnitten. Dieses Brandschutzmaterial schäumt bei Feuer um das Sechs- bis Fünfzehnfache auf und verschließt dabei alle Hohlräume, so daß ein Flammen- und Rauchgasdurchschlag durch die Trennwandöffnung zuverlässig verhindert wird.

Wenn bei der erfindungsgemäßen Verschließvorrichtung nur Rauchgasdichtheit gefordert wird, ergibt sich eine besonders kostensparende Ausführung der Verschließvorrichtung, wenn gemäß einer vorteilhaften Ausführungsform der Erfindung der Rahmen auf der Vorderoder Rückseite der Trennwand angeordnet wird, die Füll- und Packstücke aus Steinwolle, Glasfaser- oder Brandschutzmaterial bestehen und die verbleibenden Zwischenräume mit einer Einkomponenten-Spachtelmasse verfüllt und verdichtet werden, die unter der Bezeichnung "Flammadur® F200" bekannt ist. Diese Verfüllungsmasse hat ebenso wie das Brandschutzmaterial die Eigenschaft, bei Feuer extrem stark aufzuschäumen, so daß auch alle noch offenen Spalten zwischen den Kabeln einerseits und den Kabeln und dem Rahmen andererseits abgedichtet werden.

Gemäß einer alternativen Ausführungsform der Erfindung ist je ein Rahmen auf der Vorder- und Rückseite der Trennwand angeordnet, die Füll- und Packstücke aus mittels Imprägnierflüssigkeit quellbaren Quellmodulen hergestellt und in jedem Rahmen eine auch durch das einliegende Brandschutzkissen hindurchgehende Öffnung zum Einfüllen einer Vergußmasse vorgesehen. Die Quellmodule sind unter der Bezeichnung Geaquello® im Handel erhältlich. Als Vergußmasse wird E950 oder E795 verwendet. Eine zusätzliche Öffnung im Rahmen, die ebenfalls durch das Brandschutzkissen hindurchführt, ermöglicht die Entlüftung während des Einfüllens der Vergußmasse. Diese alternative Ausführungsform der Verschließvorrichtung ist zwar in der Fertigung teurer, da sowohl der Montageaufwand als auch die Materialkosten größer sind, doch wird hier neben der Rauchgasdichtheit auch eine absolute Wasserdichtheit erzielt. Das zusätzliche Verkleben der beiden Rahmen an der Trennwand kann entfallen, da die Gas- und Wasserdichtheit zwischen. Rahmen und Trennwand durch die Vergußmasse gewährleistet ist.

Gemäß einer bevorzugten Ausführungsform der Erfindung ist ein von den Kabeln gebildeter, durch die Trennwandöffnung hindurchgeführter Kabelverbund auf einem schienenartigen, steifen Träger abgestützt, der durch die Trennwandöffnung hindurchgeführt und von dem Rahmen umschlossen ist. Das Hindurchführen eines durchgängigen Kabelträgers vereinfacht die Montage, erhöht die Sicherheit der Kabelführung zwischen zwei Wänden oder Schotten und entlastet den an der Wand oder dem Schott befestigten Rahmen von dem Gewicht des Kabelverbunds, das nunmehr über den Kabelträger direkt auf der Trennwand abgestützt wird.

Die Erfindung ist anhand von in der Zeichnung dargestellten Ausführungsbeispielen im folgenden näher beschrieben. Es zeigen:

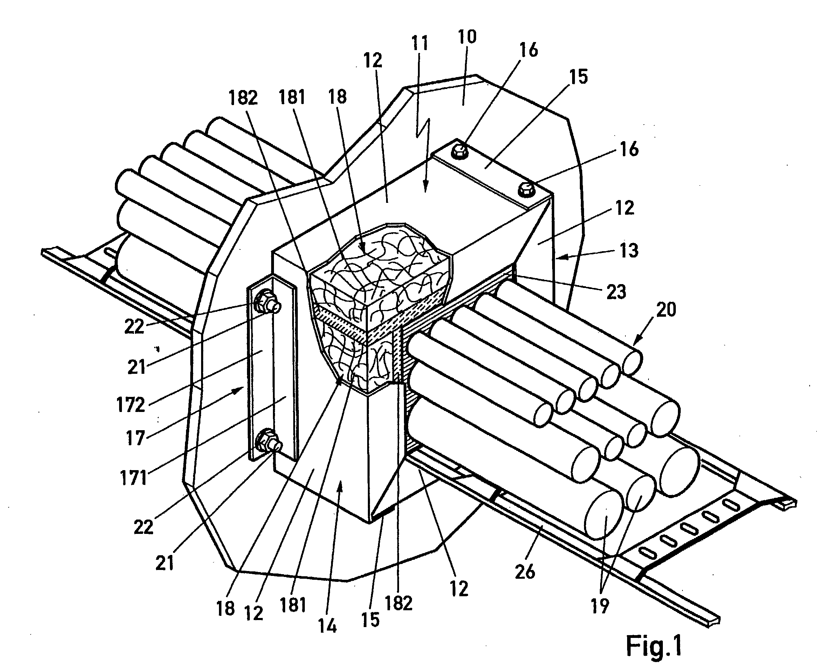

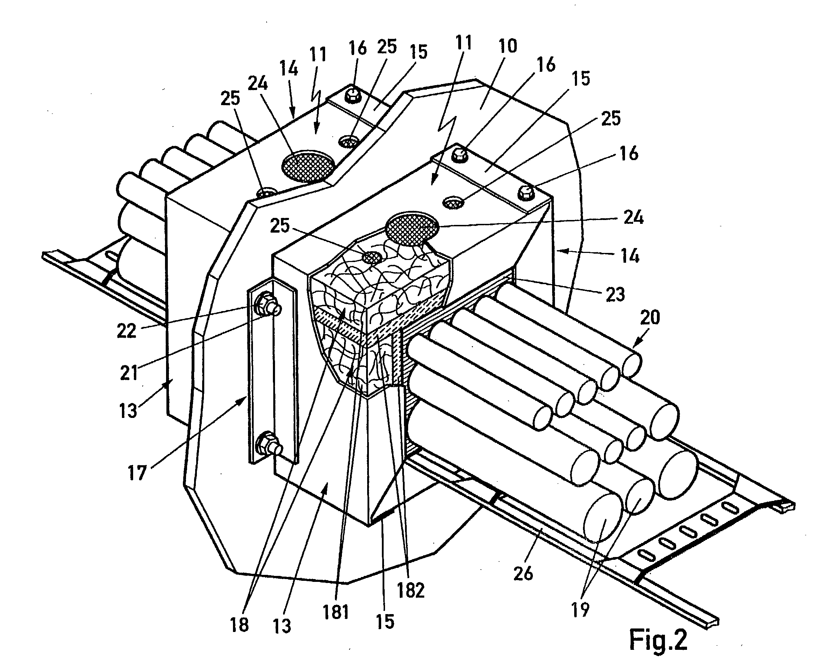

- Fig. 1 und 2: jeweils eine perspektivische Darstellung einer Vorrichtung zum Verschließen einer Kabeldurchführung.

Die in Fig. 1 in perspektivischer Ansicht dargestellte, auch Brandschutzkassette genannte Vorrichtung zum Verschließen einer Kabeldurchführung in einer Trennwand 10, wie sie z.B. von einem Schott in einem Schiff oder von einem Schiffsdeck, aber auch von einer Wand in einem Industriegebäude oder einem Bürogebäude der privaten oder öffentlichen Hand dargestellt wird, weist einen zweiteiligen rechteckförmigen oder quadratischen Rahmen 11 auf, dessen insgesamt vier Rahmenschenkel 12 jeweils ein U-förmiges Querschnittsprofil aufweisen. Die beiden Rahmenteile 13, 14 des in Achsrichtung diagonal geteilten Rahmens 11 sind aus 1 mm starken Blech gefertigt und weisen jeweils zwei rechtwinklig voneinander wegstrebende Rahmenschenkel 12 auf. Jeweils ein Rahmenschenkel 12 an jedem Rahmenteil 13, 14 trägt an seinem freien Schenkelende eine Befestigungslasche 15, die rechtwinklig von dem Schenkelende abgebogen ist und bei zusammengesetztem Rahmen 11 einen Rahmenschenkel 12 des jeweils anderen Rahmenteils 14, 13 übergreift. In den Befestigungslaschen 15 sind Durchgangslöcher zum Hindurchstecken von Eindrehschrauben 16 und in dem zugeordneten Rahmenschenkel 12 mit den Durchstecköffnungen fluchtende Gewindebohrungen vorgesehen, in die die Eindrehschrauben 16 eingedreht werden. Zur Befestigung des Rahmens 11 an der Trennwand 10 ist jedem Rahmenteil 13, 14 ein Befestigungswinkel 17 zugeordnet, der mit einem Winkelschenkel 171 an einem Rahmenschenkel 12 angeschweißt ist und in seinem anderen Winkelschenkel 172 zwei im Abstand voneinander angeordnete Durchtrittsöffnungen zum Hindurchführen von Stehbolzen 18 aufweist, die an der Trennwand 10 senkrecht abstehend befestigt sind. Bevorzugt finden sich die beiden Befestigungswinkel an zueinander parallelen Rahmenschenkeln 12. In jeden Rahmenschenkel 12 ist ein formschlüssig zugeschnittenes Brandschutzkissen 18 bündig eingedrückt. Jedes Brandschutzkissen 18 ist zweilagig aus den Lagen 181 und 182 zusammengesetzt. Die Lage 181 besteht aus nichtbrennbaren Mineralstoffen, z.B. Steinwolle oder Glasfasern, und die Lage 182 aus einem unter Hitzeeinwirkung quellenden Brandschutzmaterial. Die Lage 182 ist dabei aus dem besonders dafür geeigneten, flexiblen Schaumstoff zugeschnitten, wie er im Handel unter der Bezeichnung "Flammadur® VP F400" (AIK Flammadur Brandschutz GmbH) erhältlich ist.

Zur Installation der Brandschutzkassette werden die beiden Rahmenteile 13, 14 um einen durch eine hier nicht zu sehende Trennwandöffnung in der Trennwand 10 hindurchgeführten Kabelverbund 20 aus einer Mehrzahl von einzelnen Kabeln 19 gelegt. Der Kabelverbund 20 ist auf einem steifen Kabelträger 26 abgestützt, der durch die Trennwandöffnung hindurchgeführt ist und dadurch das Gewicht des Kabelverbunds 20 unmittelbar in die Trennwand 10 einleitet. Die um den Kabelverbund 20 herumgelegten Rahmenteile 13,14 umschließen damit auch den Kabelträger 26 an der Unterseite des Kabelverbunds 20. Die beiden Rahmenteile 13,14 werden nunmehr über die Befestigungslaschen 15 zu dem geschlossenen Rahmen 11 miteinander verbunden. Dann wird die der Trennwand 10 zugekehrte Stirnfläche des Rahmens 11 mit einem Kleber, z.B. Sikaflex, versehen und die Befestigungswinkel 17 auf die in richtiger Zuordnung zur Trennwandöffnung angebrachten Stehbolzen 21 aufgeschoben. Durch Aufdrehen von Muttern 20 auf die Stehbolzen 21 wird der Rahmen 11 im Abstand von der Trennwandöffnung, diese vollständig umschließend, gegen die Trennwand 10 gepreßt, wobei der aufgebrachte Kleber eine gasdichte Klebeverbindung zwischen Rahmen 11 und Trennwand 10 herstellt. Zwischen den Kabeln 19 einerseits und den Kabeln 19 und dem Rahmen 11 andererseits werden sog. Füll- und Packstücke eingesetzt, die in Fig. 1 insgesamt mit 23 bezeichnet sind. Diese Füllund Packstücke 23 füllen die Hohlräume zwischen den Kabeln 19 aus und positionieren diese zugleich innerhalb der Kabeldurchführung. Sie bestehen aus 6 mm dicken Stücken aus Steinwolle oder Glasfasermaterial oder aus einem gleichen Schaumstoff wie die Lage 182 des Brandschutzkissens 18. Noch verbleibende offene Zwischenräume zwischen den Kabeln 19 bzw. zwischen den Kabeln 19 und dem Rahmen 11 werden von vorn mit einer Einkomponenten-Spachtelmasse mittels einer Spritzkartusche verfüllt und verdichtet. Die Oberfläche der Verfüllung wird mit einem Spachtel oder Pinsel geglättet. Die verwendete Spachtelmasse ist unter der Handelsbezeichnung Flammadur® F200 (AIK Flammadur Brandschutz GmbH) erhältlich. Bei Feuer schäumt sowohl die Lage 182 des Brandschutzkissens 18 als auch die Spachtelmasse um das Sechs- bis Fünfzehnfache auf und dichtet selbst die kleinsten Hohlräume innerhalb der Brandschutzkassette ab. Damit wird ein Flammen- und Rauchgasdurchschlag durch die Kabeldurchführung verhindert. Die bei Feuer sinternde und schrumpfende Lage 181 des Brandschutzkissens 18 gibt genügend Freiraum für das Aufquellen der Lage 182, so daß extreme Druckkräfte, die zu einem Sprengen des Rahmens 11 oder einem Abdrücken des Rahmens 11 von der Trennwand 10 und damit zur Gasundichtigkeit der Brandschutzkassette führen können, vermieden werden.

Bei der in Fig. 2 dargestellten Vorrichtung zum Verschließen der Kabeldurchführung sind insgesamt zwei identisch ausgebildete Rahmen 11 vorgesehen, von denen jeweils einer auf der Vorderseite und der andere auf der Rückseite der Trennwand 10 angeordnet ist. Jeder Rahmen 11 ist identisch aufgebaut, wie zu Fig. 1 beschrieben, wobei auch die zweilagigen Brandschutzkissen 18 in den vier U-förmigen Rahmenschenkeln 12 bündig einliegen. In jeden Rahmen 11 ist noch eine Einfüllöffnung 24 und zwei Entlüftungsöffnungen 25 eingebracht, die auch das darunterliegende Brandschutzkissen 18 vollständig durchdringen. Die Öffnungen 24 und 25 sind bevorzugt in dem bei der Montage oben liegenden Rahmenschenkel 12 des einen Rahmenteils 13 angeordnet. Die Füll- und Packstücke 23 bestehen hier - anders als bei der Brandschutzkassette gemäß Fig. 1 - aus sog. Quellmodulen, die unter der Bezeichnung Geaquello® im Handel erhältlich sind. Diese Quellmodule haben die Eigenschaft, nach Durchsetzen mit einer Imprägnierflüssigkeit stark aufzuquellen.

Die Installation der Verschließvorrichtung ist zunächst. soweit indentisch, wie die der Brandschutzkassette gemäß Fig. 1, wobei jeweils die beiden Rahmenteile 13,14 eines jeden der zweigeteilten Rahmen 11 um den Kabelverbund 20 mit Kabelträger 26 herumgelegt und miteinander verbunden und schließlich an der Trennwand 10 verschraubt werden. Die Verklebung zwischen der Stirnwandfläche der beiden Rahmen 11 und der Vorder- und Rückseite der Trennwand 10 kann entfallen. Zum Separieren der einzelnen Kabel 19 innerhalb des Kabelverbundes 20 und zum Ausfüllen der dabei entstehenden Hohlräume zwischen den Kabeln 19 einerseits und zwischen den Kabeln 19 und dem Rahmen 11 andererseits werden die Quellmodule eingesetzt und danach mit Imprägnierflüssigkeit E824 bespritzt. Mit Aufquellen der Quellmodule bildet sich in wenigen Minuten eine stabile und vergußdichte Stirnwand. Nunmehr wird über die Einfüllöffnung 24 eine Vergußmasse E795 oder E950 eingefüllt. Diese Vergußmasse wird durch Mischen zweier Komponenten, einer Flüssigkeits- und einer Pulverkomponente, hergestellt. Beim Verfüllen der Vergußmasse kann Luft über die Entlüftungsöffnungen 25 entweichen. Die Vergußmasse wird so lange eingegossen, bis sie in der Einfüllöffnung 24 nicht mehr absinkt. Nach 3 bis 4 Stunden ist die Vergußmasse abgebunden und nach ca. 72 Stunden ausgehärtet.

## Patentansprüche

1. Vorrichtung zum Verschließen einer Kabeldurchführung in Trennwänden mit mindestens einem durch eine Trennwandöffnung hindurchgeführten Kabel (19) mit Abstand umschließenden, in Achsrichtung teilbaren Rahmen (11), der auf die Trennwand aufgesetzt und an dieser befestigt ist, und mit zwischen den Kabeln (19) sowie den Kabeln (19) und dem Rahmen (11) eingelegten Füllund Packstücken (23), wobei der Rahmen (11) mit einem Brandschutzkissen (18) bündig ausgefüllte U-förmige Rahmenschenkel (12) aufweist,
**dadurch gekennzeichnet,**
**daß** das Brandschutzkissen (18) zweilagig aus einer Lage (181) unbrennbarer Mineralstoffe, vorzugsweise Steinwolle oder Glasfasern, und einer Lage (182) aus unter Hitzeeinwirkung quellendem -Brandschutzmaterial zusammengesetzt ist.

2. Vorrichtung nach Anspruch 1,
**dadurch gekennzeichnet,**
**daß** der Rahmen (11) diagonal geteilt und die beiden, jeweils zwei rechtwinklig zueinander ausgerichtete Rahmenschenkel (12) aufweisenden Rahmenteile (13, 14) lösbar miteinander verbunden sind.

3. Vorrichtung nach Anspruch 1 oder 2,
**dadurch gekennzeichnet,**
**daß** der Rahmen (11) an der Trennwand (10) verschraubt ist und hierzu an mindestens zwei einander gegenüberliegenden Rahmenschenkeln (12) jeweils einen querabstehenden Befestigungswinkel (17) trägt und vorzugsweise daß zwischen dem Rahmen (11) und der Trennwand (10) eine gasdichte Klebeverbindung hergestellt ist.

4. Vorrichtung nach einem der Ansprüche 1 bis 3,
**dadurch gekennzeichnet,**
**daß** der zweiteilige Rahmen (11) aus Blech mit einer vorzugsweisen Blechstärke von 1 mm gefertigt ist.

5. Vorrichtung nach einem der Ansprüche 1 bis 4,
**dadurch gekennzeichnet,**
**daß** die Lage aus Brandschutzmaterial des in den Rahmenschenkel (12) einliegenden Brandschutzkissens (18) aus flexiblem Schaumstoff, beispielweise Flammadur^{(R)} VP F400, geschnitten ist.

6. Vorrichtung nach einem der Ansprüche 1 bis 5,
**dadurch gekennzeichnet,**
**daß** der Rahmen (11) auf der Vorder- oder Rückseite der Trennwand (10) angeordnet ist, daß die Füll- und Packstücke (23) aus Steinwolle, Glasfaser- oder Brandschutzmaterial bestehen und daß die verbleibenden Zwischenräume mit einer Einkomponenten-Spachtelmasse, beispielweise Flammadur^{(R)} F200, verfüllt und verdichtet sind.

7. Vorrichtung nach Anspruch 6,
**dadurch gekennzeichnet,**
**daß** die Verfüllung der Spachtelmasse mittels einer Spritzkartusche vorgenommen und die Oberfläche mit einem Pinsel oder Spachtel geglättet ist.

8. Vorrichtung nach Anspruch 6 oder 7,
**dadurch gekennzeichnet,**
**daß** die Dicke der Füll- und Packstücke (23) etwa 6 mm beträgt.

9. Vorrichtung nach einem der Ansprüche 1 bis 5,
**dadurch gekennzeichnet,**
**daß** je ein Rahmen (11) auf der Vorder- und Rückseite der Trennwand (10) angeordnet ist, daß die Füll- und Packstücke (23) aus mittels Imprägnierflüssigkeit quellbaren Quellmodulen, beispielweise Geaquello^{(R)}, bestehen und daß mindestens ein mit einem zweilagigen Brandschutzkissen (18) ausgefüllter Rahmenschenkel (12) eines jeden Rahmens (11) eine auch das Brandschutzkissen (18) durchdringende erste Öffnung (24) zum Einfüllen einer Vergußmasse und mindestens eine zweite Öffnung (25) zum Entlüften beim Einfüllen der Vergußmasse aufweist.

10. Vorrichtung nach einem der Ansprüche 1 - 9,
**dadurch gekennzeichnet,**
**daß** ein von den Kabeln (19) gebildeter, durch die Trennwandöffnung hindurchgeführter Kabelverbund (20) auf einen schienenartigen, steifen Träger (26) abgestützt ist, der durch die Trennwandöffnung hindurchgeführt und von dem Rahmen (11) umschlossen ist.

## Claims

1. A device for sealing a cable penetration in partition walls with a frame (11) dividable in the axial direction and enclosing at a distance at least one cable (19) passed through a partition wall opening, said frame being placed onto the partition wall to which it is fastened, and with filling and packing pieces (23) inserted between the cables (19) and between the cables (19) and the frame (11), said frame (11) being provided with U-shaped frame legs (12) that are filled with a fire pillow (18) lying flush therewith,
**characterized in that**
the fire pillow (18) is composed of two layers, one layer (181) consisting of nonflammable mineral substances, preferably of rock wool or glass fibres, and one layer (182) being made of a fire stopping material that expands under the action of heat.

2. The device according to claim 1,
**characterized in that**
the frame (11) is diagonally divided and that the two frame parts (13, 14), which are each provided with two frame legs (12) that are perpendicularly oriented relative to one another, are releasably joined together.

3. The device according to claim 1 or 2,
**characterized in that**
the frame (11) is screwed to the partition wall (10) for the purpose of which it is respectively provided, on at least two opposite legs (12) of the frame, with an angle bracket (17) projecting in a transverse direction, and preferably that a gas tight bonding connection is achieved between the frame (11) and the partition wall (10).

4. The device according to one of the claims 1 through 3,
**characterized in that**
the two part frame (11) is made of sheet iron of preferably 1 mm thick.

5. The device according to one of the claims 1 through 4,
**characterized in that**
the layer of fire stopping material of the fire pillow (18) inserted in the frame leg (12) is cut in a flexible foam, e.g., Flammadur® VP F400.

6. The device according to one of the claims 1 through 5,
**characterized in that**
the frame (11) is arranged on the front or rear side of the partition wall (10), that the filling and packing pieces (23) are made of rock wool, glass fibre or fire stopping material and that the remaining clearances are filled up and sealed with a one component filler, e.g., Flammadur® F200.

7. The device according to claim 6,
**characterized in that**
the filler is introduced by means of a spray cartridge and the surface is smoothed with a brush or a spatula.

8. The device according to claim 6 or 7,
**characterized in that**
the thickness of the filling and packing pieces (23) amounts to about 6 mm.

9. The device according to one of the claims 1 through 5,
**characterized in that**
one respective frame (11) is arranged on the front and on the rear side of the partition wall (10), that the filling and packing pieces (23) consist of swell modules, e.g., Geaquello®, that are swellable by means of an impregnated fluid, and that at least one frame leg (12) of a respective one of the frames (11), which is filled with a two layered fire pillow (18), is provided with a first port (24) that also traverses the fire pillow (18) and serves to introduce a sealing compound and with at least one second port (25) that serves to vent the air as the sealing compound is being poured thereinto.

10. The device according to one of the claims 1 through 9,
**characterized in that**
a cable assembly (20) formed by the cables (19) and passed through the partition wall opening is supported by a rail-like, rigid carrier (26) that is passed through the partition wall opening and is enclosed by the frame (11).

## Revendications

1. Dispositif pour boucher une traversée de cloison pour câbles avec au moins un cadre (11) divisible dans la direction axiale qui entoure à quelque distance un câble (19) passé au travers d'une ouverture dans la cloison et qui est placé sur et attaché à la cloison, et avec des pièces de remplissage et d'obturation (23) insérées entre les câbles (19) et entre les câbles (19) et le cadre (11), ledit cadre (11) comportant des côtés de cadre (12) en U comblés d'un tampon coupe-feu (18) qui les affleure,
**caractérisé en ce que**
le tampon coupe-feu (18) est composé de deux couches, d'une couche (181) réalisée en substances minérales ininflammables, de préférence en laine de roche ou en fibres de verre, et d'une couche (182) réalisée en un matériau coupe-feu qui gonfle sous l'effet de la chaleur.

2. Dispositif selon la revendication 1,
**caractérisé en ce que**
le cadre (11) est divisé diagonalement et que les deux parties de cadre (13, 14) comportant chacune deux côtés de cadre (12) perpendiculaires sont reliées ensemble par une liaison amovible.

3. Dispositif selon la revendication 1 ou 2,
**caractérisé en ce que**
le cadre (11) est vissé à la cloison (10) et qu'à cet effet au moins deux côtés de cadre (12) opposés sont munis chacun d'une cornière fixation (17) se détachant transversalement et de préférence qu'une liaison par collage étanche aux gaz est réalisée entre le cadre (11) et la cloison (10).

4. Dispositif selon l'une quelconque des revendications 1 à 3,
**caractérisé en ce que**
le cadre en deux parties (11) est réalisé en tôle d'une épaisseur de 1 mm de préférence.

5. Dispositif selon l'une quelconque des revendications 1 à 4,
**caractérisé en ce que**
la couche en matériau coupe-feu du tampon coupe-feu (18) inséré dans le côté de cadre (12) est coupée dans une mousse flexible, Flammadur® VP F400 par exemple.

6. Dispositif selon l'une quelconque des revendications 1 à 5,
**caractérisé en ce que**
le cadre (11) est disposé sur la face avant ou arrière de la cloison (10), que les pièces de remplissage et d'obturation (23) sont réalisées en laine de roche, en fibre de verre ou en matériau coupe-feu et que les espaces restants sont comblés et calfeutrés avec un mastic monocomposant tel que Flammadur® F200 par exemple.

7. Dispositif selon la revendication 6,
**caractérisé en ce que**
le mastic est introduit au moyen d'une cartouche d'injection et que la surface est lissée avec un pinceau ou une spatule.

8. Dispositif selon la revendication 6 ou 7,
**caractérisé en ce que**
l'épaisseur des pièces de remplissage et d'obturation (23) est de l'ordre de 6 mm.

9. Dispositif selon l'une quelconque des revendications 1 à 5,
**caractérisé en ce que**
un cadre (11) est disposé respectivement sur la face avant et arrière de la cloison (10), que les pièces de remplissage et d'obturation (23) sont réalisées par des modules gonflants qu'on fait gonfler au moyen d'un liquide d'imprégnation, les modules Geaquello® par exemple, et qu'au moins un côté de cadre (12) de chaque cadre (11), comblé d'un tampon coupe-feu (18) constitué de deux couches, comporte un premier orifice (24) qui transperce également le tampon coupe-feu (18) et sert à y introduire un mastic et au moins un deuxième orifice (25) qui sert à la ventilation lors de l'introduction du mastic.

10. Dispositif selon l'une quelconque des revendications 1 à 9,
**caractérisé en ce qu'**
un faisceau de câbles (20) formé par les câbles (19) et traversant l'ouverture dans la cloison est en appui sur un porteur (26) rigide en forme de rail qui traverse l'ouverture dans la cloison et est entouré par le cadre (11).
